# EUROPEAN PATENT APPLICATION

(11) **EP 0 907 119 A1**
(43) Date of publication of application: **07.04.1999**
(21) Application number: 98830560.3
(22) Date of filing: 25.09.1998
(51) Int. Cl.: G05D 16/06, F16K 17/28

(54) **Manual resetting excess flow control valve particularly for use with gas pressure regulators**

(30) Priority: 03.10.1997 IT BS970104
(71) Applicant: NOVA COMET S.r.l., I-25030 Torbole Casaglia (Brescia) (IT)
(72) Inventor: Aguiari, Bruno, 25030 Torbole Casaglia (Brescia) (IT)
(74) Representative: Manzoni, Alessandro

(57) **Abstract**

The invention concerns an excess flow valve and manual resetting for gas pressure regulators. The valve is positioned in the regulator body in a housing (21) provided between the gas input (17) and a feed hole (18) to the regulating chamber.
It has a valve seating (22) transited by the gas flow from said entrance to said feed hole and by an axis at right angles to that of the entrance and by the fact that it includes a spherical obturator (23) placed free to move in an cavity (25) at the front of the valve seating (22). The spherical obturator (23) is normally detached from said valve seating in order to allow it to open but with the possibility of moving towards and against said valve seating to close it should there be an excess flow of gas from the input conduit.

## Description

The present invention concerns the gas pressure regulator sector with particular reference to a manual resetting excess flow valve for these regulators.

A European safety standard in force provides that gas regulators may be equipped with an excess flow valve with manual resetting after each valve action. The excess valve must be able to intervene to intercept the flow of gas should the flexible tube which connects a regulator to a combustion unit become, for whatever reason or cause, detached. The excess valve intervenes when the regulator exit is open to the atmosphere, that is, when, with the regulator open, the difference between the gas pressures up stream (cylinder) and downstream (atmosphere) of the regulator exceed a certain threshold, resulting in the gas flow tending to increase without due cause.

Excess flow control valves of various types and use for a particular application have already been presented. However the aim of the present invention is to provide an excess flow valve for gas regulators with manual resetting, such a valve being housed inside the casing of the regulator and giving maximum reliability in that it is able to function whatever the horizontal or inclined position of the regulator is, including the falling over of the latter while operating. In fact, the falling over of a gas cylinder together with a regulator during operating creates a dangerous situation which can only be corrected by the intervention of an excess flow valve.

Another aim of the invention is to supply an excess flow valve with a differentiated intervention threshold depending on the position of the regulator, the valve itself having an obturator which positions itself and is at different distances from the valve housing in relation to the inclination of the regulator.

These aims are achieved in practice by an excess valve in conformity with claim 1.

Further details of the invention become more evident on following the description made with reference to the enclosed drawings, in which:
Fig. 1 shows a cross section of a gas pressure regulator complete with excess flow valve;
Fig. 2 shows a cross-section view of the valve along the line II-II on Fig. 1; and
Fig. 3 shows a variation in the disposition of the excess flow valve.

The pressure regulator, given here as an example, is made up of a body 11 and a cover 12 which are both assembled and, in the usual way, include an interposed membrane 13, a regulating chamber 14 and a compensating chamber 15.

The body 11 includes a device 16 for attaching the regulator to the union of the gas cylinder.

The regulating chamber 14 is connected on the one side with the inlet passage 17 of the gas coming from the cylinder through a feed hole 18 and, on the other side with an exit passage 19 of the gas towards the user unit - not shown. An opening/closing element 20 operates on the feed hole actuated by the membrane 13 depending on the gas pressure in the regulating chamber 14.

According to the present invention a housing 21 for an excess flow valve is made in the casing 11 upstream of the regulating chamber 14, between the input passage 17 and the feed hole 18. This includes a conical valve 22 housing and a ball obturator 23. The housing of the conical valve 22 is formed at the front of a bushing 24 inserted and tightened down into housing 21. The conical housing 22 is facing an cavity 25 delimited by the bushing 24 and the bottom 21' of housing 21. The spherical obturator 23 is placed in this cavity 25 and can move freely towards or away from the conical housing 22.

The spherical obturator 23 is made either totally or at least on the surface of a soft material such as rubber for seals or such like.

The bushing 24 has an axial hole 26 and some radial holes 27 to allow the gas coming from input 17 to flow from chamber 25 to the feed hole 18 and consequently into the regulating chamber 14.

A rod or plunger 28 is housed either in an axial and/or radial hole 26 of the bushing 24 with one end facing the conical housing 22 and the opposite end being equipped with a push-button 29. The rod or plunger 28 has peripheral seals 30 and can move along its axis in the direction of the conical housing to push up against the push-button 29 and in the opposite direction, that is away from the conical housing, by means of a return spring 31 placed between the bushing or push-button.

Cavity 25 is shaped so that when the spherical obturator 23 is in the open position it is at different distances or at a variable level from the valve housing 22 depending on the horizontal position or degree of inclination of the regulator, this distance decreases when moving from the horizontal to the vertical position in reference to the axis of housing 21 or seat 22.

In the same way, cavity 25 can be off-centre compared with valve housing 22 so that the obturator 23 falls into the lowest part of the cavity when the regulator is in a horizontal position. Furthermore, the cavity can be conical or, as seen in the drawings, have ribbing 32 which reduces it in size starting from the valve seating 22 to the end 21'. In this way the spherical obturator 23 will rest at different distances or levels from this seat moving closer to it in proportion to the increase in inclination of the regulator along the horizontal axis.

In practice, the spherical obturator 23 is normally in the open position. When on the other hand there is a set gas flow from the regulating chamber 14 through the valve seating 22, the spherical obturator 23 is pushed up against seating 22, closing it with a good seal thanks to the force of the gas and the morbid material the obturator is made of or coated with.

Depending on the inclination of the regulator and the internal configuration of cavity 25, the spherical obturator will be, as stated above, at different levels compared to the valve seating.

The less the slope is, the less the resistance the sphere will show to the gas flow. Consequently the closing intervention threshold of the obturator differs in ratio to the position of the regulator, thus facilitating the intervention in the case of the regulator falling over while operating.

Resetting following closure on the part of the valve is always carried out by pressing push-button 29 so as to distance the obturator from the valve seating using the rod or plunger 28. Resetting in this way can also be carried out using other appropriate systems, such as levers or something similar, without reducing the scope of this invention.

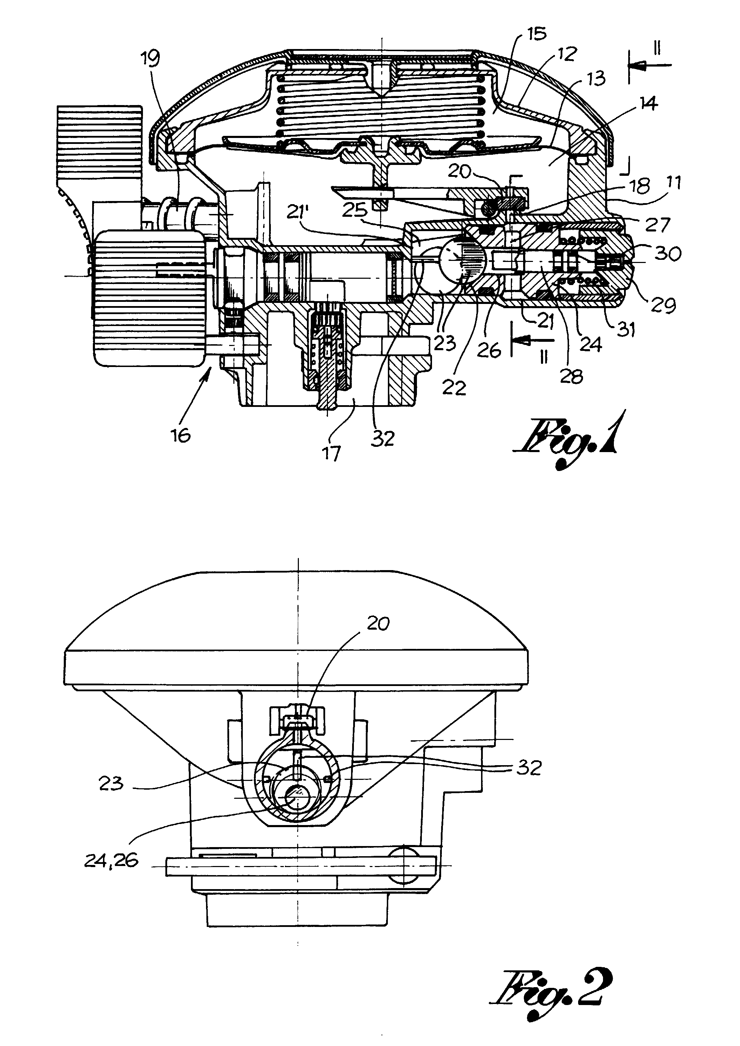

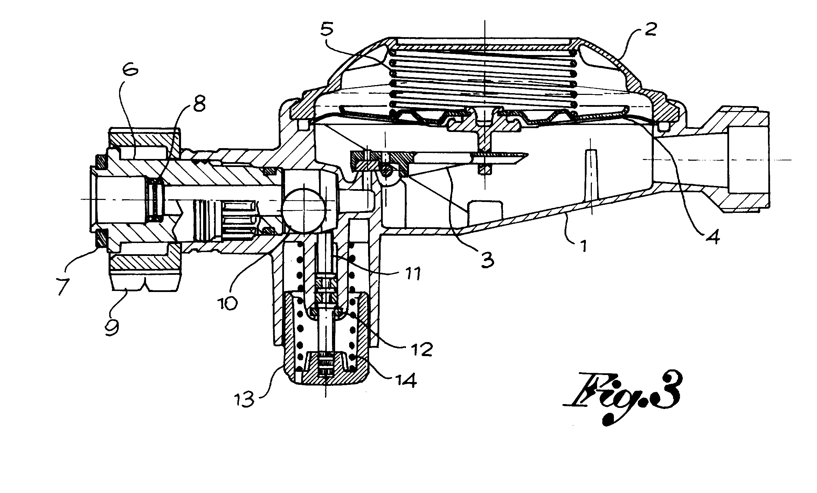

Fig. 3 illustrates a variation of the pressure regulator where the excess flow valve is placed differently and its main components are indicated using the same reference numbers used in the above described invention.

## Claims

1. Manual resetting excess flow valve for gas pressure regulators, where the regulator consists of a body and a cover assembled with the interposing of a membrane to delimit a regulating chamber and a compensating chamber and where said regulating chamber is connected on one side by means of a feed hole (18) to an inlet passage (17) for gas coming from a cylinder and on the other side to an output for gas leading to a user unit, this valve being characterised by the fact that it is placed in the regulator casing in a housing (21) provided between said inlet (17) and said feed hole (18) and by the fact that the valve seating (22) is transited by the flow of gas from said input to said feed hole and that its axis is at right angles to that of the entrance and furthermore that it includes a spherical obturator (23) placed, free to move, in a cavity (25) at the front of the valve seating (22), said spherical obturator (23) being normally detached from said valve seating in order to allow it to open but with the possibility of moving towards and against said valve seating to close it should there be an excess flow of gas from the inlet conduit.

2. Excess flow valve according to claim 1, where said valve seating is conical and where at least said spherical obturator surface is covered with a soft material.

3. Excess flow valve according to claims 1 and 2, where said cavity (25) at the front of the valve seating (22) is shaped so that the spherical obturator (23) in the open position is positioned at different distances, that is at variable inclinations in relation to the valve seating depending on the horizontal position or inclination of the regulator; the distance or inclination of the obturator from the valve seating decreasing with the increase in inclination in relation to the horizontal position.

4. Excess flow valve according to claim 3, where said cavity (25) is off-centre in relation to the valve seating (22) and/or is conical so as to narrow in the opposite direction to that of the valve seating and/or has asymmetric internal ribbing.

5. Excess flow valve according to any previous claim, where a manual resetting device is provided to force the spherical obturator out of its closing position up against the valve seating.

6. Manual resetting excess flow valve, particularly for use with gas pressure regulators for the specified aims as basically described, illustrated and claimed above.
